# EUROPÄISCHE PATENTSCHRIFT

(11) **EP 0 436 850 B1**
(45) Veröffentlichungstag und Bekanntmachung des Hinweises auf die Patenterteilung: **07.06.1995**
(21) Anmeldenummer: 90123739.6
(22) Anmeldetag: 10.12.1990
(51) Int. Cl.: F16D 35/02

(54) **Flüssigkeitsreibungskupplung mit innerem Bimetall**
Fluid friction clutch with inner bimetallic element
Embrayage à frottement visqueux avec élément bimétallique interne

(30) Priorität: 21.12.1989 DE 3942270
(43) Veröffentlichungstag der Anmeldung: 17.07.1991
(73) Patentinhaber: Behr GmbH & Co., D-70469 Stuttgart (DE)
(72) Erfinder: Illg, Manfred, Dipl.-Ing., W-7148 Remseck 2 (DE); Sterzl, Norbert, W-7000 Stuttgart 50 (DE)

(56) Entgegenhaltungen:
- DE-B- 1 216 036
- DE-C- 3 246 783
- GB-A- 2 169 064
- US-A- 3 339 689
- US-A- 3 419 122

## Beschreibung

Die Erfindung bezieht sich auf eine Flüssigkeitsreibungskupplung nach dem Oberbegriff des Anspruches 1.

Eine derartige Flüssigkeitsreibungskupplung ist aus der DE-C 32 46 783 bekannt. Bei dieser Flüssigkeitsreibungskupplung ist zusätzlich zu dem außen angeordneten Bimetall innerhalb der Kupplung, d.h. in der Vorratskammer ein weiteres Bimetall, ein sog. inneres Bimetall angeordnet. Dieses innere Bimetall beaufschlagt den Ventilhebel in der Weise, daß dieser bei überschreiten eines bestimmten Temperaturniveaus im Inneren der Kupplung geschlossen wird und somit den Zufluß des viskosen Mediums von der Vorratskammer in die Arbeitskammer unterbindet. Dadurch wird die Kupplung abgeschaltet. Damit wird zwar eine Überhitzung der Kupplung bzw. des viskosen Mediums möglicherweise verhindert, nachteilig ist jedoch, daß, wenn die Kupplung im Antrieb eines Kühlerpropellers für eine Brennkraftmaschine verwendet wird, die Regelung der Drehzahl des Kühlerpropellers dadurch eine unerwünschte Beeinträchtigung erfährt: Die vorübergehende Abschaltung der Kupplung kann zu einer unzureichenden Kühlung der Brennkraftmaschine führen.

Durch die DE-AS 1 216 036 wurde ferner eine Flüssigkeitsreibungskupplung bekannt, bei welcher die Füllung des Arbeitsraumes sowohl durch ein außerhalb als auch innerhalb der Kupplung angeordnetes Bimetall gesteuert wird. Durch diese Maßnahme soll das Ansteigen der Lüfterdrehzahl bei starker Beschleunigung des Motors verzögert werden. Das innere Bimetall ist hierbei als Ventilhebel ausgebildet, welcher die Ventilöffnung in der Trennwand bis zum Erreichen der kritischen Temperatur verschließt. Insofern ist diese Kupplung unabhängig von der Stellung des Ventilhebels, der über das äußere Bimetall gesteuert wird, bis zum Erreichen dieser kritischen Temperatur im Inneren der Kupplung abgeschaltet. Diese Abschaltung der Kupplung im unteren Temperaturbereich ist insofern nachteilig, als sie eine unerwünschte Beeinträchtigung der Regelung in diesem Bereich bedeutet, z.B. eine zu starke Absenkung der Leerlaufdrehzahl oder eine verzögerte Zuschaltung der Kupplung, was zu einer kurzzeitigen Überhitzung der Brennkraftmaschine führen kann.

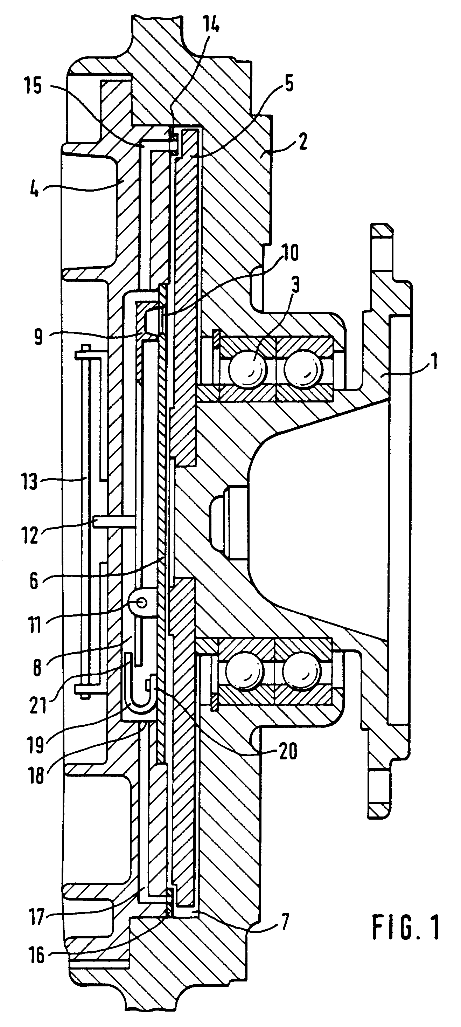

Schließlich wurde durch die DE-C 14 24 251 eine Flüssigkeitsreibungskupplung bekannt, die ebenfalls mit einem äußeren und inneren Bimetall arbeitet, wobei dieses innere Bimetall ebenfalls als Ventilhebel ausgebildet ist, der die Ventilöffnung in der Trennwand - unabhängig von dem durch das äußere Bimetall gesteuerten Ventilhebel - abdeckt bzw. teilweise abdeckt (Fig. 1 und Fig. 4). Dieses innere Bimetall wirkt ebenfalls in der Weise, daß es oberhalb eines bestimmten Temperaturniveaus innerhalb der Kupplung die Ventilöffnung freigibt und somit den Zufluß des viskosen Mediums vom Vorratsraum in den Arbeitsraum, d.h. die Kupplung zuschaltet. Unterschiedlich gegenüber der vorgenannten Druckschrift ist hier, daß das Bimetall die Einlaßöffnung bzw. Ventilöffnung nicht vollständig verschließt, sondern immer einen Minimalquerschnitt freiläßt. Dennoch findet hier immer noch eine Beeinträchtigung der Außentemperatursteuerung statt, was als nachteilig gelten kann.

Die US-PS 3,419,122 zeigt eine Flüssigkeitsreibungskupplung mit einer Antriebsscheibe, in welcher sich ein ringförmiger Vorratsraum befindet, der über zwei Ventilöffnungen mit dem Arbeitsraum in Verbindung steht. Diese beiden Ventilöffnungen werden durch ein als Bimetallstreifen ausgebildetes Ventilschließglied kontrolliert, und zwar in der Weise, daß sich die Enden des Bimetalls bei Erwärmung von den Ventilöffnungen abheben und somit einen Durchflußquerschnitt freigeben. Zusätzlich zu diesem "inneren" Bimetall befindet sich auf der Frontseite der Kupplung ein "äußeres" Bimetall, welches über einen Schaltstift auf das innere Bimetall (Ventilschließglied) einwirkt. Durch diese Bauweise ist keine saubere Trennung von Außen- und Innentemperatureinfluß möglich, weil Ventilschließglied und inneres Bimetall dasselbe Teil sind.

Aufgabe der vorliegenden Erfindung ist es, bei einer Flüssigkeitsreibungskupplung der eingangs genannten Art das Regelverhalten in der Weise zu verbessern, daß ohne wesentliche Beeinflussung der Außentemperatursteuerung eine Überhitzung der Kupplung und des viskosen Mediums vermieden wird.

Diese Aufgabe wird durch die Merkmale der Flüssigkeitsreibungskupplung nach Anspruch 1 gelöst. Durch die Erfindung wird erreicht, daß der Zustrom von viskosem Medium von der Vorratskammer in die Arbeitskammer oberhalb einer bestimmten Temperatur tₓ erhöht und damit die Wärmeabfuhr verstärkt wird. Dies ist der einzige Eingriff in die Außentemperatursteuerung, die somit unterhalb dieser bestimmten Temperatur tₓ nicht beeinträchtigt wird, weil nämlich das innere Bimetall nicht als Ventilhebel ausgebildet ist, sondern lediglich als temperaturabhängiger "Verstärker" für die Ventilhebelbewegung im Öffnungssinne wirkt. Die Temperaturschwelle tₓ ist bezüglich der Reaktion des inneren Bimetalls so gelegt, daß sie der maximalen Schlupfleistung, d.h. der maximalen Wärmeentwicklung in der Kupplung entspricht - letztere tritt bei einer Abtriebsdrehzahl auf, die etwa zwei Drittel der Antriebsdrehzahl entspricht, d.h. bei ein Drittel Schlupf. Um in diesem kritischen Arbeitsbereich der Kupplung eine Überhitzung, insbesondere des Öls zu vermeiden, verstärkt das innere Bimetall die Öffnungsbewegung des Ventilhebels, so daß somit mehr Öl durch den Arbeitsraum strömt und somit mehr Wärme abgeführt wird. Dabei steigt die Lüfterdrehzahl infolge des stärkeren Füllungsgrades der Kupplung kurzfristig um etwa 20 % an, d.h., sie läuft aus dem kritischen Drehzahlbereich heraus und sorgt für eine stärkere Kühlluftförderung durch den Kühler, was wiederum zu einer Abkühlung der Kupplung führt.

Die erfindungsgemäße Flüssigkeitsreibungskupplung ist durch die Anordnung eines Bimetalls im Inneren der Kupplung, d.h. in der Vorratskammer und im direkten Austrittsbereich des Rücklaufkanales gekennzeichnet, wobei das Bimetall bei Erreichen der vorgenannten Temperaturschwelle im Öffnungssinne auf den Ventilhebel einwirkt. Durch die Anordnung des Bimetalls im direkten Austrittsbereich des in die Vorratskammer zurückströmenden Öls kann das Bimetall sofort auf die Öltemperatur reagieren, so daß keine Verzögerung und damit keine Überhitzung des Öls auftritt. Das Silikonöl kann somit bis an seine äußerste thermische Belastungsgrenze heran ausgenutzt werden, die unterhalb der jeweiligen Geliertemperatur t_{G} des betreffenden Silikonöles liegt.

Weitere vorteilhafte Ausgestaltungen der Erfindung ergeben sich aus den Unteransprüchen 2 bis 7, die besondere Anordnungen und Ausbildungen des inneren Bimetalls beinhalten.

Ausführungsbeispiele der Erfindung sind in der Zeichnung dargestellt und werden im folgenden näher beschrieben. Es zeigen
- Fig. 1: einen Schnitt durch die erfindungsgemäße Flüssigkeitsreibungskupplung,
- Fig. 2: einen Teilschnitt mit einer zweiten Ausführungsform des inneren Bimetalls und
- Fig. 3: einen Teilschnitt mit einer dritten Ausführungsform des inneren Bimetalls.

Die in Fig. 1 dargestellte Flüssigkeitsreibungskupplung zeigt in bekannter Weise eine Antriebswelle 1, auf der eine Primärscheibe 5 befestigt ist. Drehbar auf der Antriebswelle 1 gelagert ist ein Gehäuse 2, mittels der Kugellager 3. Das Gehäuse 2, welches auf seinem Außenumfang einen nicht dargestellten Lüfter trägt, ist auf seiner Vorderseite durch einen Deckel 4 abgeschlossen und bildet im Inneren eine Arbeitskammer 7. in welcher die Primärscheibe 5 umläuft, und eine Vorratskammer 8, die über eine Trennwand 6 von der Arbeitskammer 7 abgetrennt ist. In der Trennwand 6 befindet sich eine Ventilöffnung 10, die über den Ventilhebel 9 kontrolliert wird, welcher als Wippe ausgebildet und in dem Gelenk 11 gegenüber der Trennwand 6 gelagert ist. Ein auf der Außenseite der Kupplung auf deren Deckel 4 angeordnetes äußeres Bimetall 13 wirkt über einen Schaltstift 12 auf den Ventilhebel 9 und steuert somit den Zustrom von viskosem Medium aus der Vorratskammer 8 in die Arbeitskammer 7. Aus dieser wird das viskose Medium, d.h. ein handelsübliches Silikonöl über einen Staukörper 14 und einen Rücklaufkanal 15 in die Vorratskammer 8 zurückgefördert, so daß sich bei geöffnetem Ventilhebel 9 eine Zirkulation des viskosen Mediums zwischen Vorrats- und Arbeitskammer ergibt. Soweit ist diese Kupplung bekannt. In erfindungsgemäßer Weise ist nun in der Vorratskammer 8 ein inneres Bimetall 19 angeordnet. welches U-förmig ausgebildet und mit einem seiner U-Schenkel 20 an der Trennwand 6 befestigt ist. Der andere freie U-Schenkel 21 ist je nach Temperaturbeauf-schlagung des inneren Bimetalls 19 in Kontakt mit dem freien Ende des Ventilhebels 9. Bei dem dargestellten Ausführungsbeispiel ist zusätzlich zu dem bereits erwähnten Rückströmungskanal 15 ein weiterer Rückströmungskanal 17 mit einem weiteren Staukörper 16 vorgesehen, und zwar in der Weise, daß sich das innere Bimetall 19 direkt gegenüber dem unmittelbaren Austrittsbereich 18 des Rücklaufkanales 17 befindet. Durch diese Zuordnung von Rücklaufkanal 17 und innerem Bimetall 19 wird eine unmittelbare Beaufschlagung des Bimetalls mit dem rückströmenden Öl gewährleistet, d.h. das innere Bimetall 19 reagiert sofort auf Temperaturänderungen in der Arbeitskammer 7. Aus der zeichnerischen Darstellung ist klar ersichtlich, daß das innere Bimetall 19 die Ventilöffnung 10 in keiner Weise beeinflußt.

Die Arbeitsweise dieser Kupplung ist die folgende: Die äußere Temperatursteuerung, d.h. die über das äußere Bimetall 13 erfolgt in an sich bekannter Weise über den Schaltstift 12 und den Ventilhebel 9, d.h. bei erhöhter Außentemperatur wölbt sich das äußere Bimetall 13 und öffnet das Ventil 9/10, so daß Silikonöl aus der Vorratskammer 8 in die Arbeitskammer 7 fließen kann und die Kupplung langsam zuschaltet. Solange sich die Temperatur im Inneren der Kupplung unterhalb eines bestimmten Temperaturniveaus tₓ befindet, arbeitet die Kupplung wie mit einer bekannten Außentemperatursteuerung. Wenn jedoch das aus dem Rücklaufkanal 17 austretende Silikonöl das Temperaturniveau tₓ überschreitet, dann führt die Beaufschlagung des inneren Bimetalls 19 mit dem erhitzten zurückströmenden Öl zu einer Verformung in der Weise, daß der freie U-Schenkel 21 das freie Ende des Ventilhebels 9 beaufschlagt und im Öffnungssinne betätigt. Dadurch wird der Ventilhebel weiter von der Ventilöffnung 10 abgehoben, und mehr Silikonöl strömt aus der Vorratskammer 8 in die Arbeitskammer 7, so daß die Lüfterdrehzahl ansteigt. Andererseits wird durch die verstärkte Ölzirkulation auch mehr Wärme aus der Arbeitskammer 7 abgeführt - somit wird eine Überhitzung des Silikonöls vermieden. Darüber hinaus wird durch die Drehzahlerhöhung der Kühleffekt des Lüfters verstärkt, was wiederum zu einer Abkühlung der Kupplung führt. Dann nimmt das innere Bimetall 19 wieder seine vorherige U-förmige Gestalt an, so daß das freie Ende des Ventilhebels 9 nicht mehr vom freien U-Schenkel 21 des Bimetalls 19 beaufschlagt ist.

Die Temperatur tₓ ist dabei so bemessen, daß sie unterhalb der Geliertemperatur t_{G} der gebräuchlichen Silikonöle liegt, wobei die Geliertemperatur t_{G} etwa im Bereich von 160°C bis 200°C liegt.

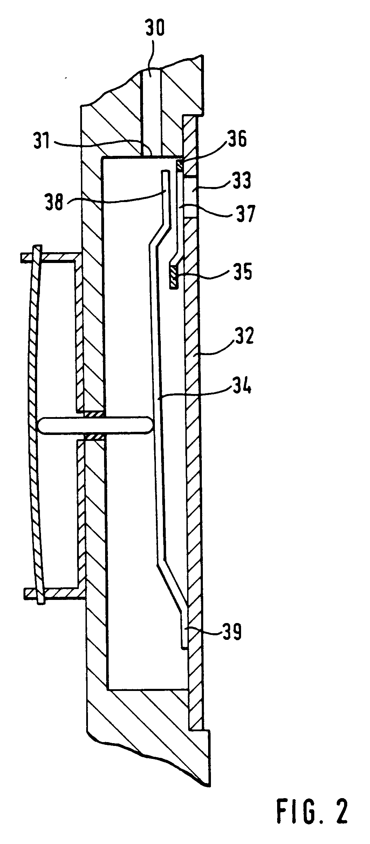

Fig. 2 zeigt ein weiteres Ausführungsbeispiel der Erfindung, d.h. der Anordnung und der Ausbildung des inneren Bimetalls 37. In diesem Falle ist der Ventilhebel 34 mit seinem einen Ende 39 fest an der Trennwand 32 befestigt und in sich federnd ausgebildet und überdeckt mit seinem anderen Ende 38 die Ventilöffnung 33 in der Trennwand 32. Das Bimetall 37 ist wiederum im unmittelbaren Austrittsbereich 31 des Rücklaufkanales 30 angeordnet. wobei hier (im Gegensatz zu Fig. 1) nur ein Rücklaufkanal vorgesehen ist. Das Bimetall 37 ist mit seinem einen Ende 36 fest mit der Trennwand 32 verbunden, während sein anderes freies Ende 35 frei beweglich ist und damit in der Lage, den Ventilhebel 34 im Öffnungssinne zu beaufschlagen. Das Bimetall 37 selbst wirkt also nicht als Ventilhebel im Hinblick auf die Ventilöffnung 33, da es diese in keiner Weise beeinflußt. Auch hier wirkt das Bimetall 37 in der zuvor beschriebenen Weise: Das aus dem Austrittsbereich 31 des Rücklaufkanals 30 austretende Öl beaufschlagt das Bimetall 37, welches sich bei Erreichen der Temperaturschwelle tₓ verformt, d.h. von der Trennwand 32 abhebt und damit den Ventilhebel 34 weiter von der Ventilöffnung 33 entfernt. Dadurch stömt mehr Silikonöl durch die Ventilöffnung 33 in den Arbeitsraum 7.

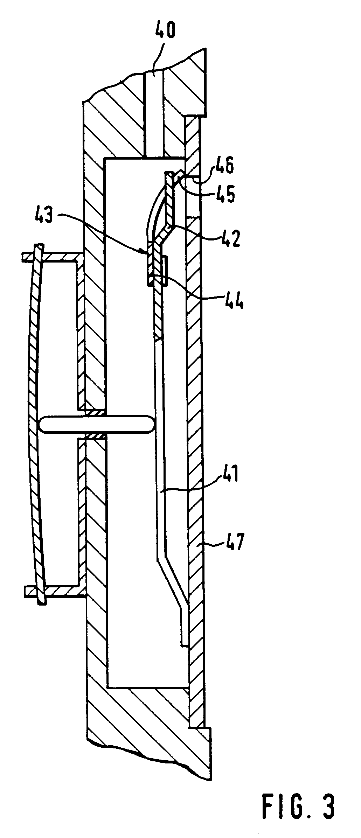

Ein weiteres Ausführungsbeispiel der Erfindung ist in Fig. 3 dargestellt, wo das Bimetall 43 mit seinem einen Ende 44 am Ventilhebel 41 befestigt ist. Das andere freie Ende des Bimetalls stützt sich gegenüber der Trennwand 47 ab und bewirkt somit bei stärkerer Krümmung ein weiteres Abheben des Ventilhebels 42 von der Ventilöffnung 46. Das Bimetall 43 ist wiederum im unmittelbaren Austrittsbereich des Rücklaufkanals 40 angeordnet und wird somit direkt von dem zurückströmenden Silikonöl beaufschlagt.

## Patentansprüche

1. Flüssigkeitsreibungskupplung, bestehend aus einer antreibenden, mit einer Antriebswelle (1) verbundenen Primärscheibe (5), einem abtreibenden Gehäuse (2), welches drehbar auf der Antriebswelle (1) gelagert ist und einen Vorratsraum (8) sowie einen Arbeitsraum (7) aufweist, die durch eine Trennwand (6) voneinander getrennt sind, wobei die Zirkulation des viskosen Mediums über ein außerhalb der Kupplung angeordnetes Bimetall (13), ein inneres Bimetall (19) und einen Ventilhebel (9) im Vorratsraum (8) gesteuert wird und der Zulauf des viskosen Mediums zum Arbeitsraum (7) über eine Ventilöffnung (10) und der Rücklauf des viskosen Mediums in den Vorratsraum (8) über mindestens einen Staukörper (14, 16) und mindestens einen Rücklaufkanal (15, 17) erfolgt, **dadurch gekennzeichnet,** daß das innere Bimetall (19) im Austrittsbereich des Rücklaufkanals (17) in den Vorratsraum (8) angeordnet ist und den Ventilhebel (9) im Öffnungssinne in Abhängigkeit von einer bestimmten Temperatur tₓ betätigt, die repräsentativ für die maximale Schlupfleistung der Kupplung ist.

2. Flüssigkeitsreibungskupplung nach Anspruch 1, **dadurch gekennzeichnet,** daß das innere Bimetall (19) im unmittelbaren Austrittsbereich (18) angeordnet ist, d.h. in einem temperaturmäßig begrenzten Bereich, dessen Temperatur nur unwesentlich unter der Temperatur tₓ im Austrittsbereich (18) des Rücklaufkanals (17) liegt.

3. Flüssigkeitsreibungskupplung nach Anspruch 2, **dadurch gekennzeichnet,** daß das Temperaturgefälle zwischen der Temperatur tₓ im Austrittsbereich (18) und der Temperatur t_{y} am Bimetall (19) nicht größer als 30°C ist.

4. Flüssigkeitsreibungskupplung nach einem der Ansprüche 1 bis 3, **dadurch gekennzeichnet,** daß die Temperatur tₓ im Austrittsbereich (18) unterhalb der Geliertemperatur t_{G} des viskosen Mediums (Silikonöl) liegt.

5. Flüssigkeitsreibungskupplung nach einem der Ansprüche 1 bis 4, **dadurch gekennzeichnet,** daß der Ventilhebel (9) als Wippe über ein Gelenk (11) gegenüber der Trennwand (6) gelagert ist und daß das Bimetall (19) U-förmig gebogen, mit seinem einen U-Schenkel (20) an der Trennwand (6) befestigt und mit seinem anderen (freien) U-Schenkel (21) das freie Ende des Venilhebels im Öffnungssinne betätigt.

6. Flüssigkeitsreibungskupplung nach einem der Ansprüche 1 bis 4, **dadurch gekennzeichnet,** daß der Ventilhebel (34) mit seinem einen Ende (39) an der Trennwand (32) befestigt (eingespannt) ist und mit seinem freien Ende (38) die Ventilöffnung (33) abdeckt und daß im Bereich der Ventilöffnung (33) das innere Bimetall (37) angeordnet ist, welches mit seinem einen Ende (36) an der Trennwand (32) befestigt ist und mit seinem anderen Ende (35) frei beweglich ist und den Ventilhebel (34) im Öffnungssinne betätigt.

7. Flüssigkeitsreibungskupplung nach einem der Ansprüche 1 bis 4, **dadurch gekennzeichnet,** daß der Ventilhebel (41) mit einem Ende fest an der Trennwand (47) angeordnet und mit dem anderen Ende (42) die Ventilöffnung (46) abdeckt und daß das innere Bimetall (43) am freien Ende (42) des Ventilhebels (41) mit seinem einen Ende (44) befestigt ist und mit seinem anderen Ende (45) sich gegenüber der Trennwand (47) abstützt und somit den Ventilhebel (41) im Öffnungssinne betätigt.

## Claims

1. Fluid friction clutch, comprising a driving primary disc (5) connected to a drive shaft (1), an output housing (2) which is mounted rotatably on the drive shaft (1) and comprises a reservoir (8) as well as a working chamber (7) which are separated from one another by means of a dividing wall (6), the circulation of the viscous medium being controlled by means of a bimetal element (13) disposed outside the clutch, an internal bimetal element (19), and a valve lever (9) in the reservoir (8), the viscous medium being admitted to the working chamber (7) through a valve opening (10) and the viscous medium returning to the reservoir (8) through at least one retaining body (14, 16) and at least one return duct (15, 17), **characterized in that** the internal bimetal element (19) is disposed in the region of the outlet of the return duct (17) into the reservoir (8) and operates the valve lever (9) in the opening sense in dependence on a predetermined temperature tₓ which is representative of the maximum slip capacity of the clutch.

2. Fluid friction clutch according to Claim 1, **characterized in that** the internal bimetal element (19) is disposed directly in the outlet region (18), i.e., in a region delimited according to temperature, the temperature of which lies only insignificantly below the temperature tₓ in the outlet region (18) of the return duct (17).

3. Fluid friction clutch according to Claim 2, **characterized in that** the temperature drop between the temperature tₓ in the outlet region (18) and the temperature t_{y} on the bimetal element (19) is no greater than 30°C.

4. Fluid friction clutch according to any one of Claims 1 to 3, **characterized in that** the temperature tₓ in the outlet region (18) lies below the gelling temperature t_{G} of the viscous medium (silicone oil).

5. Fluid friction clutch according to any one of Claims 1 to 4, **characterized in that** the valve lever (9) is mounted as a rocker opposite the dividing wall (6) by means of an articulation (11), and in that the bimetal element (19) is bent so as to be U-shaped with one of its U-arms (20) fixed to the dividing wall (6) and operates the free end of the valve lever in the opening sense with its other (free) U-arm (21).

6. Fluid friction clutch according to any one of Claims 1 to 4, **characterized in that** the valve lever (34) is fixed (clamped) to the dividing wall (32) by one of its ends (39) and covers the valve opening (33) with its free end (38), and in that the inner bimetal element (37) is disposed in the region of the valve opening (33) and is fixed by one of its ends (36) to the dividing wall (32), its other end (35) being freely movable and operating the valve lever (34) in the opening sense.

7. Fluid friction clutch according to any one of Claims 1 to 4, **characterized in that** the valve lever (41) is disposed with one end fixed on the dividing wall (47) and covers the valve opening (46) with the other end (42), and in that the internal bimetal element (43) is fixed by one of its ends (44) to the free end (42) of the valve lever (41) and bears against the dividing wall (47) with its other end (45) thus operating the valve lever (41) in the opening sense.

## Revendications

1. Embrayage à frottement visqueux, comprenant un disque primaire (5) menant, relié à un arbre d'entraînement (1), un carter (2) mené, monté rotatif sur l'arbre d'entraînement (1) et présentant une chambre-réservoir (8) ainsi qu'une chambre de travail (7), qui sont séparées l'une de l'autre par une cloison (6), la circulation du fluide visqueux étant commandée par un élément bimétallique (13) placé à l'extérieur de l'embrayage, un élément bimétallique interne (19) et un levier de soupape (9) dans la chambre-réservoir (8), l'écoulement du fluide visqueux vers la chambre de travail (7) s'effectuant à travers un orifice de soupape (10) et l'écoulement de retour du fluide visqueux dans la chambre-réservoir (8) s'effectuant à travers au moins une pièce de retenue (14, 16) et au moins un canal de retour (15, 17), **caractérisé en ce que** l'élément bimétallique interne (19) est disposé dans la zone de sortie du canal de retour (17) à l'intérieur de la chambre-réservoir (8) et cet élément actionne le levier de soupape (9) dans le sens de l'ouverture en fonction d'une température tₓ déterminée qui est représentative de la puissance de glissement maximale de l'embrayage.

2. Embrayage à frottement visqueux selon la revendication 1, caractérisé en ce que l'élément bimétallique interne (19) est disposé dans la zone immédiate de sortie (18), c'est-à-dire dans une zone limitée, quant à la température, dont la température est seulement de peu inférieure à la température tₓ dans la zone de sortie (18) du canal de retour (17).

3. Embrayage à frottement visqueux selon la revendication 2, caractérisé en ce que le gradient de température entre la température tₓ dans la zone de sortie (18) du canal de retour et la température t_{y} sur l'élément bimétallique (19) ne dépasse pas 30°C.

4. Embrayage à frottement visqueux selon une des revendications 1 à 3, caractérisé en ce que la température tₓ dans la zone de sortie (18) est au-dessous du point de gélification t_{G} du fluide visqueux (huile silicone).

5. Embrayage à frottement visqueux selon une des revendications 1 à 4, caractérisé en ce que le levier de soupape (9) est monté à la façon d'une bascule vis-avis de la cloison (6), par une articulation (11), et que l'élément bimétallique (19) est courbé en forme de U et fixé par une branche (20) de sa forme en U à la cloison (6), tandis qu'il actionne par son autre branche (libre) (21) l'extrémité libre du levier de soupape dans le sens de l'ouverture.

6. Embrayage à frottement visqueux selon une des revendications 1 à 4, caractérisé en ce que le levier de soupape (34) est fixé (serré) par une extrémité (39) à la cloison (32) et recouvre par son extrémité libre (38) l'orifice de soupape (33), et que l'élément bimétallique interne (37) est disposé dans la région de l'orifice de soupape (33), fixé par une extrémité (36) à la cloison (32) et librement mobile par son autre extrémité (35), par laquelle il agit sur le levier de soupape (34) dans le sens de l'ouverture.

7. Embrayage à frottement visqueux selon une des revendications 1 à 4, caractérisé en ce que le levier de soupape (41) est disposé fixe par une extrémité sur la cloison (47) et recouvre par l'autre extrémité (42) l'orifice de soupape (46), et que l'élément bimétallique interne (43) est fixé par une extrémité (44) à l'extrémité libre (42) du levier de soupape (41) et s'appuie par son autre extrémité (45) vis-a-vis de la cloison (47) pour actionner ainsi le levier de soupape (41) dans le sens de l'ouverture.
